# EUROPEAN PATENT APPLICATION

(11) **EP 1 826 729 A1**
(43) Date of publication of application: **29.08.2007**
(21) Application number: 06021415.2
(22) Date of filing: 12.10.2006
(51) Int. Cl.: G07D 7/12

(54) **Image sensor, discriminating device, and correction method**

(30) Priority: 28.02.2006 JP 2006051562
(71) Applicant: Hitachi-Omron Terminal Solutions, Corp., Shinagawa-ku Tokyo 141-0032 (JP)
(72) Inventor: Kato, Atsushi, Tokyo 100-8220 (JP); Mori, Akira, Tokyo 100-8220 (JP)
(74) Representative: Strehl Schübel-Hopf & Partner

(57) **Abstract**

An image sensor 10 is provided with a liquid crystal shutter 17 that can switch between a transmissive state and a reflective state, disposed between a light source 13 and a discrimination surface 22. Immediately before discriminating an object, the liquid crystal shutter 17 is switched to the reflective state, and the light that is reflected from the liquid crystal shutter 17 is read and compared to data that has been read for the light that is reflected from the liquid crystal shutter 17 at a reference time, stored in advance, to calculate a compensation value. Next the liquid crystal shutter 17 is switched to a transmissive state and the light that is reflected from the object is read, and the compensation value is used to perform a compensation process. The liquid crystal shutter 17 can be switched easily between the reflective state and the transmissive state electrically.

## Description

### Background of the Invention

### Field of the Invention

The present invention relates to a discriminating device, and particularly relates to a discriminating device provided with reflective image sensors.

### Description of Related Arts

Image sensors in discriminating devices discriminate objects through illuminating objects with light emitted from a light source and then detecting transmitted light or reflected light. Because light sources in discriminating devices typically degrade over time, there may be differences in detected values, even when detecting the same object, when detected values immediately after the discriminating device is deployed are compared to those detected values after a substantial amount of time has elapsed after deployment. For example, when a discriminating device is used in a banknote discriminating device such as in an ATM (Automated Teller Machine), the detected values may be different, even when detecting the same banknote, when the detected values immediately after the machine is deployed are compared to the detected values after a substantial amount of time has elapsed after deployment. As a result, there has been the risk of the banknote discrimination accuracy degrading over time, causing problems when people are depositing money. To prevent these problems, an approach may be considered wherein the detected values after a substantial amount of time has elapsed after deployment are corrected, and discrimination is performed using data on which a compensation process has been performed. Note that this problem is not unique to banknote discriminating devices, but rather is a problem that is found in a variety of discriminating devices that contain image sensors.

As one compensation method in conventional reflective image sensor/discriminating devices, in Japanese laid open Publication No. 2000-232555, there is a method of placing a reference document at the end of a document surface, at for example, a location on the document surface wherein there is no object to be identified, and then compensating the detected values for the object to be identified based on the detected values for the reference document. Moreover, in Japanese laid open Publication No. H07-38751, there is a method wherein a compensation plate that serves as a reference is moveable, and the compensation plate is moved onto the document surface, and detected values for the object to be identified are compensated based on the detected values for the compensation plate. Also, a reference document may be placed on a document surface, and detected values for the object to be identified may be compensated based on the detected values for the reference document. The document surface itself may be white and serve as a reference document surface, and the detected values for the object to be identified may be compensated based on the detected values for the reference document surface.

### Summary of the Invention

However, in compensation methods wherein a reference document is placed at a location on the document surface wherein the object to be identified is not present, if there is variability in the brightness depending on the location, or variability in the sensitivity of the photosensitive elements between the center area of the document surface and the location of the reference document (such as, the end of the document surface), then it will not be able to perform the compensation correctly. If the compensation method uses a moveable compensation plate that serves as the reference, then it is necessary to provide a moveable compensation plate. In methods wherein a reference document is placed on the document surface, it is necessary to interrupt the operation of the discriminating device to do so, engendering a substantial loss in productivity. In methods wherein the document surface itself serves as a reference document surface, the document surface may become scratched or soiled because, in an ATM for example, banknote is moved across the document surface. The use of a scratched or soiled document surface as a reference document surface would make it impossible to perform compensation correctly.

Given the problem areas described above, the object of the present invention is to solve the aforementioned existing problems, to thereby perform compensation/calibration for a reflective image sensor/discriminating device easily.

A first aspect of the invention, for resolving at least one of the issues described above, provides an image sensor for discriminating an object. The image sensor according to the first aspect of the invention comprises a support unit that supports the objects, a light source that illuminates the object with light for discriminating, and is disposed facing the support unit, a photosensitive unit having a photosensitive element and outputting detected value in accordance with light inputted into the photosensitive element, and being disposed on the same side of the support unit as the light source, a shutter unit that transmits or reflects light that is directed from the light source to the support unit, the shutter unit being disposed between the light source and the support unit, and a shutter control unit that controls the shutter so as to reflect light form the light source during the calibration of the photosensitive unit.

The image sensor according to the first aspect of the invention, a shutter unit for transmitting or reflecting the light from the light source to the support unit is provided, disposed between the light source and the support unit, and this shutter unit is controlled so as to reflect the light from the light source when the photosensitive unit is being calibrated, thus making it possible to perform image sensor compensation/calibration with ease.

The image sensor according to the first aspect of the invention may further comprise a second light source disposed on the opposite side of the support unit from the photosensitive unit. This arrangement enable to perform compensation/calibration easily for image sensors in document discrimination devices such as ATMs that are provided with transmissive image sensors in addition to reflective image sensors.

In the image sensor according to the first aspect of the invention, the photosensitive unit may comprise two or more photosensitive elements. For example, when used in a paper document discriminating device, the banknote to be discriminated is wide, so it is desirable for the photosensitive unit to be provided with two or more photosensitive elements.

In the image sensor according to the first aspect of the invention, the photosensitive unit may include one or more photosensitive elements, where the photosensitive unit is movable in the primary scan direction of the image sensor. According to this arrangement, the sensitivity variability between photosensitive elements may be eliminated.

In the image sensor according to the first aspect of the invention, the shutter unit may be a liquid crystal shutter. A liquid crystal shutter has no mechanical moving parts, and the transmissive state/reflective state of the shutter unit can be controlled easily electrically.

The liquid crystal used in the liquid crystal shutter in the image sensor according to the first aspect of the invention may be a cholesteric liquid crystal. A cholesteric liquid crystal enables a large luminescent flux of the light that passes through the liquid crystal shutter unit because it is possible to use glass plates instead of polarized plates for the plates between which the liquid crystal is interposed.

The image sensor according to the present invention may further comprise a compensation value calculating unit that calculates, during calibration, a compensation value using a detected value detected by the photosensitive unit and a reference value prepared in advance, and a compensation unit that corrects and outputs the detected value, detected by the photosensitive unit, using the calculated compensation value. According to this arrangement, correction or calibration of the image sensor may become easier.

A second aspect of the invention provides a discriminating device. The discriminating device of the second aspect of the invention comprises an image sensor according to the first aspect of the invention, an illumination control unit that controls at least one of turning on the light source, turning off the light source, and the brightness of the light source, an image processing unit that processes detected values detected by the photosensitive unit, a compensation value calculating unit that calculates, during calibration, a compensation value using a detected value detected by the photosensitive unit and a reference value prepared in advance, and a memory unit that stores the compensation value calculated by the compensation value calculating unit and storing the detected values processed by the image processing unit, and a compensation unit that corrects and outputs the detected values, outputted by the photosensitive unit, using the compensation value. The present invention may be implemented not only in the form of an image sensor, but may also be implemented in the form of a discriminating device using an image sensor.

A third aspect of the invention provides the method of correcting a discriminating device that is provided with a light source illuminating a support unit, a shutter unit interposed between the support unit and the light source and that is switchable between a reflective state and a transmissive state, and a photosensitive unit outputting detected value in accordance with inputted light. The method of the third aspect of the invention comprises switching the shutter unit the reflective state and detecting value of light reflected from the shutter, calculating a compensation value using the detected value of the light reflected from the shutter and a reference value to, and switching the shutter unit the transmissive state and detecting value of light reflected from the object, and correcting the detected value of the light reflected from the object using the compensation value and outputting the corrected detected value of the light reflected from the object. The present invention not only is implemented as an image sensor and a discriminating device, but may also be implemented in the form of a discriminating device compensation method.

### Brief Description of the Drawings

Fig. 1 is an explanatory diagram illustrating the functional blocks of an ATM used in an embodiment.
Fig. 2 is a block diagram illustrating the functions of the banknote discriminating unit.
Fig. 3 is a block diagram for explaining the details of the image sensor, the sensor control unit, and the image processing unit.
Fig. 4 is an explanatory diagram illustrating schematically a side view of an image sensor according to the embodiment.
Fig. 5 is an explanatory diagram illustrating schematically a front view of the image sensor according to the embodiment.
Fig. 6 is a perspective view of the image sensor according to the embodiment.
Fig. 7 is an explanatory diagram illustrating one example of a structure of a liquid crystal shutter used in the embodiment.
Fig. 8 is a flowchart illustrating the startup operations for an ATM equipped with the image sensor according to the embodiment.
Fig. 9 is a flowchart illustrating the shutdown operations after the ATM has been working.
Fig. 10 is a flowchart that is executed when the initial data is stored.
Fig. 11 is a flowchart illustrating the details of the processing when the compensation values are calculated prior to discriminating the banknote.
Fig. 12 is a flowchart illustrating the details of the process for discriminating the banknote.
Fig. 13 is an explanatory diagram illustrating schematically the side view of an image sensor according to a second modified embodiment.
Fig. 14 is a front view of the image sensor according to the second modified embodiment.
Fig. 15 is an oblique view of the image sensor according to the second modified embodiment.
Fig. 16 is an explanatory diagram illustrating a liquid crystal shutter that uses cholesteric liquid crystal.
Fig. 17 is a schematic diagram when the liquid crystal shutter has a three-layer structure.
Fig. 18 is an explanatory diagram illustrating schematically a side view of a shutter that uses electrophoresis.
Fig. 19 is an explanatory diagram illustrating schematically the top surface of a shutter that uses electrophoresis.
Fig. 20 is an explanatory diagram illustrating schematically the top surface of a shutter that uses electrophoresis.

### Detailed Description of the Invention

The present invention will be explained in the sequence shown below, based on embodiments.

### A. Structure of an ATM 1

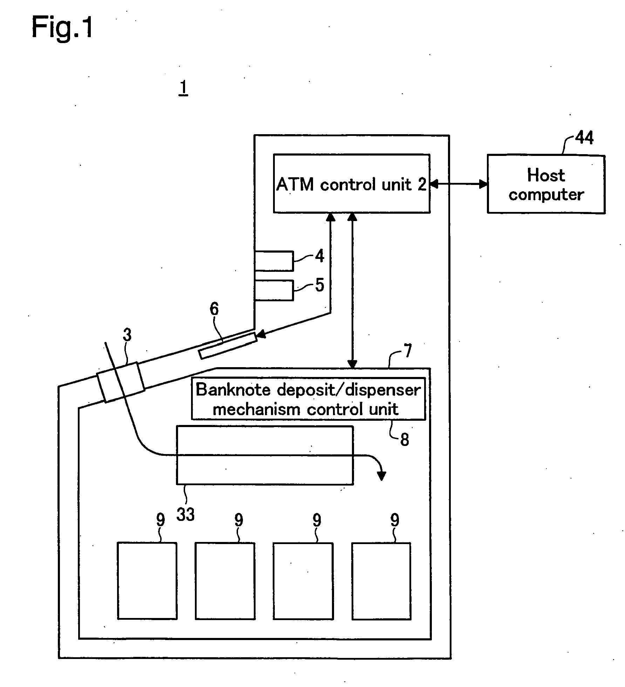

An ATM 1 according to the embodiment will be described below referencing Fig. 1. Fig. 1 is a block diagram illustrating the functions of the ATM 1 according to the embodiment. The ATM 1 comprises an ATM control unit 2, a banknote input/output opening 3, a card reader 4, a printer 5, a operating/display panel 6, and a banknote deposit/dispenser mechanism unit 7. The ATM control unit 2 controls the interface between the ATM 1 and the user, such as the card reader 4, the printer 5, and the display unit 6. For example, the ATM control unit 2 sends to a central host computer 44 cash card authentication data, the amount of money deposited into the ATM 1, and so forth, and receives from the central host computer 44 authentication pass/fail data, account balances, and so forth. The currency input/output opening 3 is a cash in/cash out opening wherein the user of the ATM 1 deposits banknote or removes banknote. The card reader 4 reads a cash card inserted into the ATM 1. The printer 5 prints onto a passbook, or prints receipts. The operating/display panel 6 displays messages from the ATM control unit 2 to the user, such as the amount of a deposit, the amount of a withdrawal, account balances, funds transfer destinations, and so forth. The operating/display panel 6 is also used as an operating/display panel, where the user of the ATM 1 performs, for example, cash deposit operations and cash dispensing operations on the operating/display panel.

The banknote deposit/dispenser mechanism unit 7 comprises a banknote deposit/dispenser mechanism control unit 8, a banknote discriminating unit 33, and a vault cassette 9. The banknote deposit/dispenser mechanism control unit 8 receives instructions from the ATM control unit 2 and not only controls the operation of the banknote deposit/dispenser mechanism unit 7, but also sends to the ATM control unit 2 denomination data for the banknote discriminated by the banknote discriminating unit 33. The banknote discriminating unit 33 discriminates the denomination of the banknote and/or the authenticity of the banknote. The vault cassette 9 stores the banknote that has been deposited, or stores the banknote for dispensing that has been prepared in advance. Typically, a plurality of vault cassettes 9 are provided, where banknote to be dispensed is stored in different vault cassettes 9 depending on the denomination.

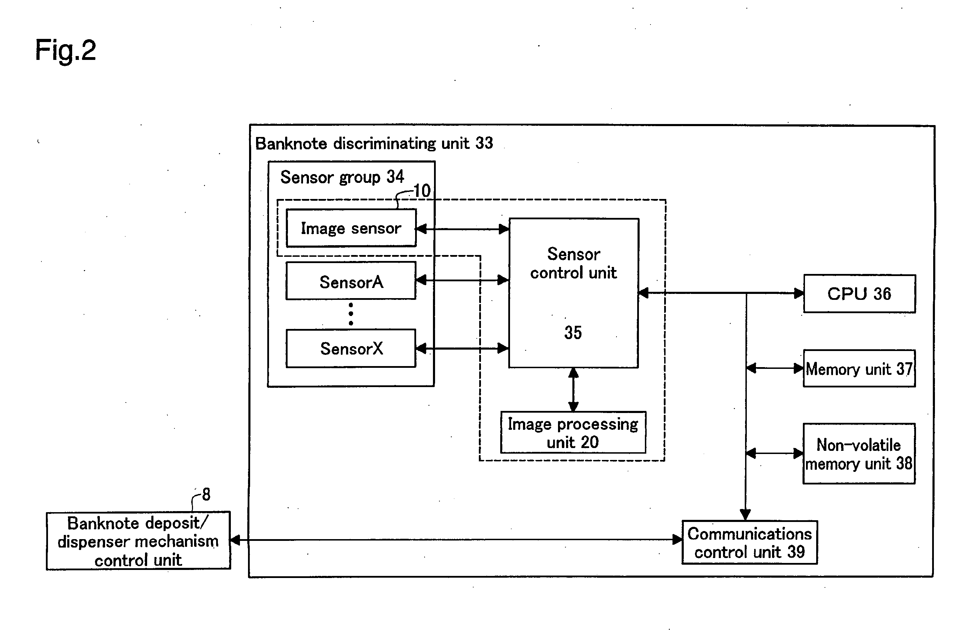

The banknote discriminating unit 33 will be explained using Fig. 2. Fig. 2 is a block diagram illustrating the structure of the banknote discriminating unit 33. The banknote discriminating unit 33 is provided with a sensor group 34, a sensor control unit 35, a central processing unit (hereinafter termed "CPU") 36, a memory unit 37, a non-volatile memory unit 38, a communications control unit 39, and an image processing unit 20.

The sensor group 34 includes a variety of sensors in addition to an image sensor 10. The sensor control unit 35 controls the various sensors of the banknote discriminating unit 33 along with the image sensor 10. The CPU 36 is the core of the banknote discriminating unit 33, and controls the operation of the banknote discriminating unit 33. The CPU 36 uses the data read out by the image sensor 10 to calculate compensation values, to perform discrimination operations by comparing the data after the compensation process to banknote data, to perform compensation processes as required, and to perform other types of calculations/data processing.

The memory unit 37 stores temporarily data such as compensation values, data after the compensation process, and comparison data used when calculating the compensation values. The non-volatile memory unit 38 is a writeable non-volatile memory, and stores the program for controlling the sensor control unit 35, along with storing various types of data such as banknote data and the initial data from when the ETM was shipped.

The communications control unit 39 performs the exchange of data with the banknote deposit/dispenser mechanism control unit 8, and receives commands from the banknote deposit/dispenser mechanism control unit 8, and sends the commands to the CPU 36. The image processing unit 20 performs the compensation process, and the like, on the detection data from the image sensor 10.

### B. Structure of the Image Sensor 10

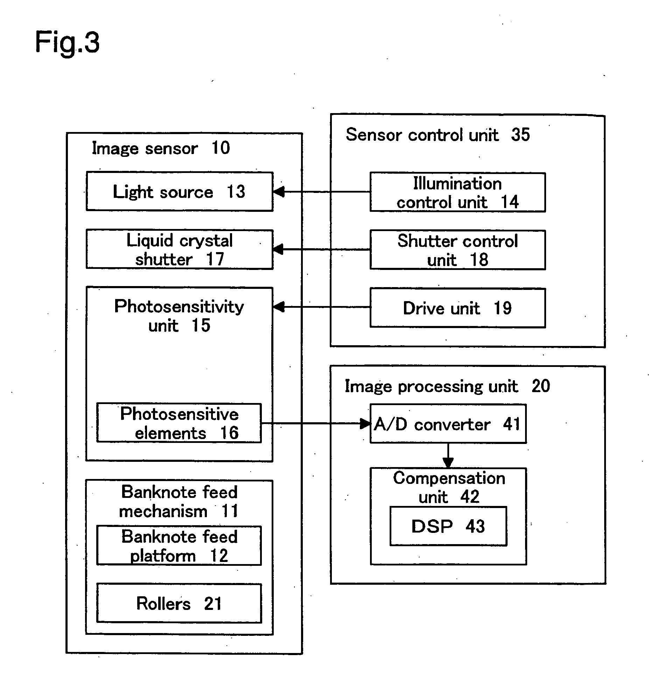

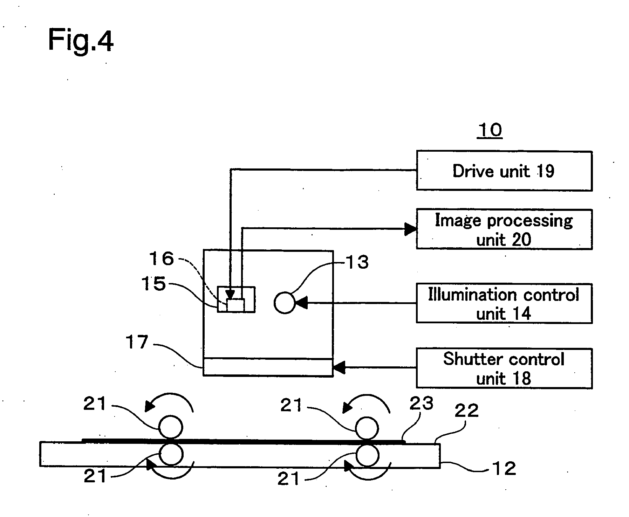

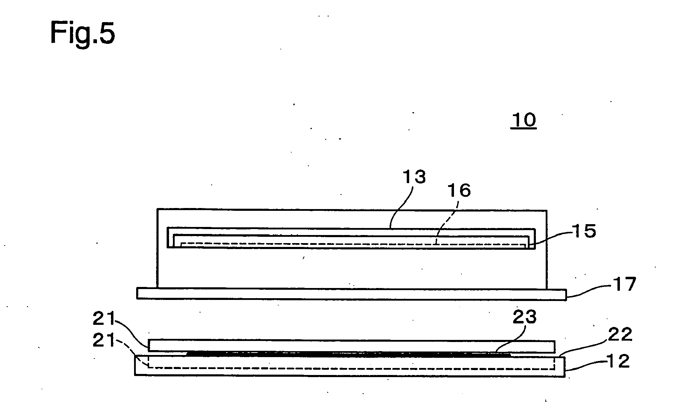

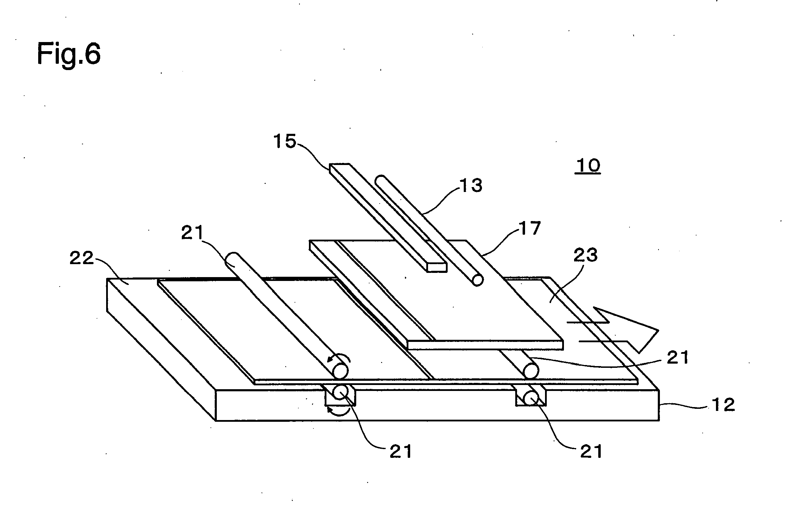

The image sensor 10, the sensor control unit 35, and the image processing unit 20 according to the embodiment, will be described in reference to Figs. 3 through 6. Fig. 3 is a block diagram for describing the details of the image sensor 10, the sensor control unit 35, and the image processing unit 20. Fig. 4 is an explanatory diagram illustrating schematically a side view of the image sensor 10 according to the embodiment. Fig. 5 is an explanatory diagram illustrating schematically a front view of the image sensor 10 according to the embodiment. Fig. 6 is an oblique view of the image sensor 10 according to the embodiment.

The image sensor 10 is provided with a banknote feed mechanism 11, a light source 13, a photosensitive unit 15, a photosensitive element 16, and a liquid crystal shutter 17.

The banknote feed mechanism 11 is provided with a banknote feed platform 12 and a plurality of rollers 21. The banknote feed platform 12 has a discrimination surface 22 on the top surface thereof, where the discrimination of the banknote 23 that is fed is performed on the discrimination surface 22. The plurality of rollers 21 are disposed in pairs so as to press against the discrimination surface 22 from above and below the banknote feed platform 12. The banknote 23 is pressed between a pair of rollers 21, and conveyed onto the banknote feed platform 12 through the rotation of the rollers 21.

The light source 13 is disposed facing the discrimination surface 22 of the banknote feed platform 12. The light source 13 illuminates the discrimination surface 22 on the banknote feed platform 12 in the shape of a line. A white cold cathode fluorescent lamp of LEDs, for example, may be used as the light source 13. Note that the color of the light source need not necessarily be white.

The liquid crystal shutter 17 is disposed between the discrimination surface 22 and the light source 13. The liquid crystal shutter 17 is used by switching the state thereof into either a transmissive state that passes light or a reflective state that reflects light.

The photosensitive part 15 is disposed on the same side of the discrimination surface 22 as the light source 13. In the photosensitive unit 15, two or more photosensitive elements 16 are disposed in a line, where the photosensitive elements 16 detect the reflected light from the incident light, from the light source 13, that is incident on the banknote 23, doing so one line at a time. MOS sensors, photodiodes, or the like, in addition to CCD sensors, may be used as the photosensitive elements 16. Note that when MOS sensors or photodiodes are used as the photosensitive elements 16, it is not possible to detect an entire line's worth of the reflected light from the incident light all at once, so the detection is performed sequentially starting from one end of the photosensitive elements 16.

The sensor control unit 35 is provided with an illumination control unit 14, a shutter control unit 18, and a drive unit 19. The illumination control unit 14 is connected to the light source 13, and turns the light source 13 on and off, and, if necessary, controls the brightness of the light source 13. The shutter control unit 18 switches the liquid crystal shutter 17 between the transmissive state that transmits light and the reflective state that reflects light. The drive unit 19 is connected to the photosensitive elements 16, and drives the detection operations of the photosensitive elements 16.

The image processing unit 20 is connected to the photosensitive elements 16, and performs image processing on the detected values detected by the photosensitive elements 16. The image processing unit 20 is provided with an A/D converter 41 for performing an A/D conversion process to convert into digital data the analog data detected values detected by the photosensitive elements 16. The image processing unit 20 is also provided with a compensation unit 42 for performing a compensation process on the detected values that have been detected by the photosensitive elements 16 and converted into digital data. More specifically, the compensation process is performed by a digital signal processor (DSP) 43 that is provided in the compensation unit 42. Note that even though the compensation unit 42 performs the compensation process in the present example of embodiment, the compensation process may be performed by the CPU 36 instead. Moreover, the A/D conversion process may be performed by the photosensitive element 16 instead.

### C. Discrimination Operation by the Image Sensor 10

Figs. 4 through 6 will be referenced in explaining the operation of the image sensor 10 when the liquid crystal shutter 17 is switched into the transmissive state, or in other words, when the banknote 23 is detected. When the illumination control unit 14 turns the light source 13 on, the shutter control unit 18 switches the liquid crystal shutter 17 to the transmissive state. The banknote 23 is conveyed sequentially over the discrimination surface 22 of the banknote feed platform 12 by the rotation of the rollers 21. The light from the light source 13 passes through the liquid crystal shutter 17 to illuminate the banknote 23, and the reflected light that is reflected from the banknote 23 arrives at the photosensitive elements 16 of the photosensitive unit 15. The photosensitive elements 16 are placed in the detecting state by the driving unit 19 to detect the reflected light. Because the photosensitive elements 16 are disposed in a line, one line's worth of reflected light can be detected in a single detection cycle. When the photosensitive elements 16 detect the line's worth of reflected light, the rollers 21 rotate to feed the banknote 23 one line's distance. When the banknote 23 is fed by one line's distance, the photosensitive elements 16 detect the next line's worth of reflected light. In this way, the photosensitive elements 16 detect the reflected light from the banknote 23 one line at a time each time the banknote 23 is fed one line's worth by the rollers 21, and ultimately the reflected light from the entirety of the banknote 23 is detected. Note that the rotation of the rollers 21 may be an intermittent action wherein the rotation is stopped each time the reflected light is read, or may be continuous rotation wherein the rotation does not stop each time the reflected light is read.

Next Figs. 4 through 6 will be referenced in describing the operation of the image sensor 10 when the liquid crystal shutter 17 is switched to the reflective state, or in other words, when the initial data is read or when the compensation values are calculated. When the illumination control unit 14 turns the light source 13 on, the shutter control unit 18 switches the liquid crystal shutter 17 into the reflective state. The light emitted from the light source 13 is incident on the liquid crystal shutter 17, and reflects on the liquid crystal shutter 17, which is in the reflective state, to arrive at the photosensitive elements 16 of the photosensitive unit 15. The photosensitive elements 16 are placed in a detecting state by the drive unit 19, to detect the reflected light. Because the photosensitive elements 16 are disposed in a line, one line's worth of values are captured in a single detection cycle. When capturing the initial data and calculating the compensation values, capturing one line's worth of detected values is adequate; however, the measurements may be performed a number of times and averaged. Doing so alleviates variability in reading. Note that if the light source 13 is capable of emitting a plurality of wavelengths, or if there is a plurality of light sources 13 for the respective wavelengths, then preferably the reflected light will be detected at each wavelength.

### D. Structure of the Liquid Crystal Shutter 17

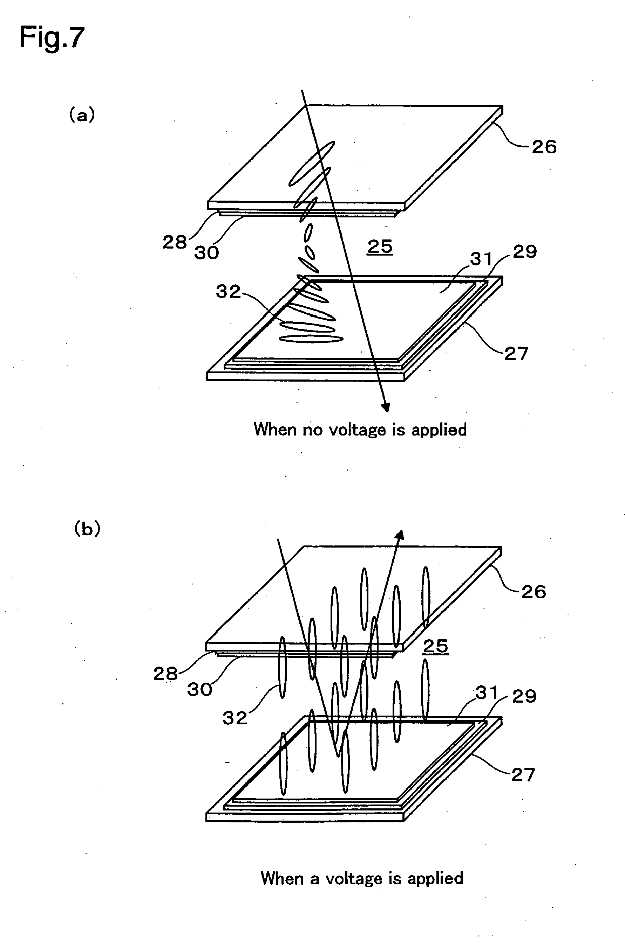

The structure of the liquid crystal 17 will be explained in reference to Fig. 7. Fig. 7 is an explanatory diagram illustrating one example of a structure of a liquid crystal shutter 17 used in the present example of embodiment. Fig. 7 (a) is an explanatory diagram of the case wherein the voltage is not applied to the liquid crystal shutter 17, and Fig. 7 (b) is an explanatory diagram of the case wherein the a voltage is applied to the liquid crystal shutter 17.

The liquid crystal shutter 17 comprises two polarizing plates 26 and 27 with a liquid crystal 25 interposed there between, with the polarizing plates 26 and 27 disposed so as to shift the direction of polarization of the light that passes through the polarizing plates 26 and 27 by 90°. The polarizing plates 26 and 27 are each provided with transparent electrodes 28 and 29, so as to be able to apply a voltage across the liquid crystal 25. Alignment layers 30 and 31 are disposed on the liquid crystal 25 side of the transparent electrodes 28 and 29. The alignment layers 30 and 31 have the characteristics of orienting the adjacent liquid crystal molecules 32 in a specific direction. The alignment layers 30 and 31 are disposed so that there will be a 90° difference in the directions of orientation of the liquid crystal molecules 32.

When there is no voltage applied across the liquid crystal 25, or in other words, when there is no voltage between the transparent electrodes 28 and 29, then, as shown in Fig. 7 (a) the liquid crystal molecules 32 are aligned parallel to the direction of alignment of the alignment layer 30 where they are in contact with the alignment layer 30, and gradually change in their orientation the further they are from the orientation layer 30. At the position wherein the liquid crystal molecules 32 are in contact with the orientation layer 31 on the opposite side, the orientation of the liquid crystal molecules 32 is 90° different from the direction of orientation of the alignment layer 30, parallel to the direction of orientation of the alignment layer 31.

When the light enters into the polarizing plate 26, only that component of the light that is polarized in one direction passes through the polarizing plate 26. Next the light passes through the liquid crystal 35, where the twist of the liquid crystal molecules 32 gradually rotates the direction of polarization of the light. The orientation of the polarization of the light when the light arrives at the polarizing plate 27 matches the direction of polarization of light that passes through the polarizing plate 27, making it possible for the light to pass through the polarizing plate 27.

On the other hand, when a voltage is applied to the liquid crystal 25, then, as shown in Fig. 7 (b), the liquid crystal molecules 32 of the liquid crystal 25 align so that the lengthwise directions of the molecules will be perpendicular to the surfaces formed by the polarizing plates 26 and 27, so no twisting occurs.

The result is that when light enters into the polarizing plate 26, then even though that component of the light that is polarized in the one direction still passes through the polarizing plate 26, no twist occurs in the liquid crystal molecules 32, so there is no change in the direction of polarization of the light while passing through the liquid crystal 25. The direction of polarization of the light when the light arrives at the polarizing plate 27 is the same as the direction of polarization of the light when the light passed through the polarizing plate 26, which is 90° different from the direction of polarization of light that would pass though the polarizing plate 27. Consequently, the light cannot pass through the polarizing plate 27, and is reflected.

The shutter control unit 18 is connected to the liquid crystal shutter 17. The shutter control unit 18 switches the liquid crystal shutter 17 to either a transmissive state or a reflective state. That is, if the shutter control unit 18 does not apply a voltage to the liquid crystal 25, then the liquid crystal shutter 17 will be in a transmissive state, and if the shutter control unit 18 applies a voltage to the liquid crystal 25, then the liquid crystal shutter 25 will be in a reflective state. Consequently, the switching of the liquid crystal shutter 17 to the transmissive state or the reflective state can be done with ease electrically through either applying or not applying a voltage to the liquid crystal 25.

The liquid crystal shutter control unit 18 will, or example, switch the liquid crystal shutter 17 to a transmissive state when detecting the banknote 23. On the other hand, the liquid crystal shutter control unit 18 will switch the liquid crystal shutter 17 to a reflective state when obtaining the initial data or calculating the compensation values.

### E. Operation of the ATM 1

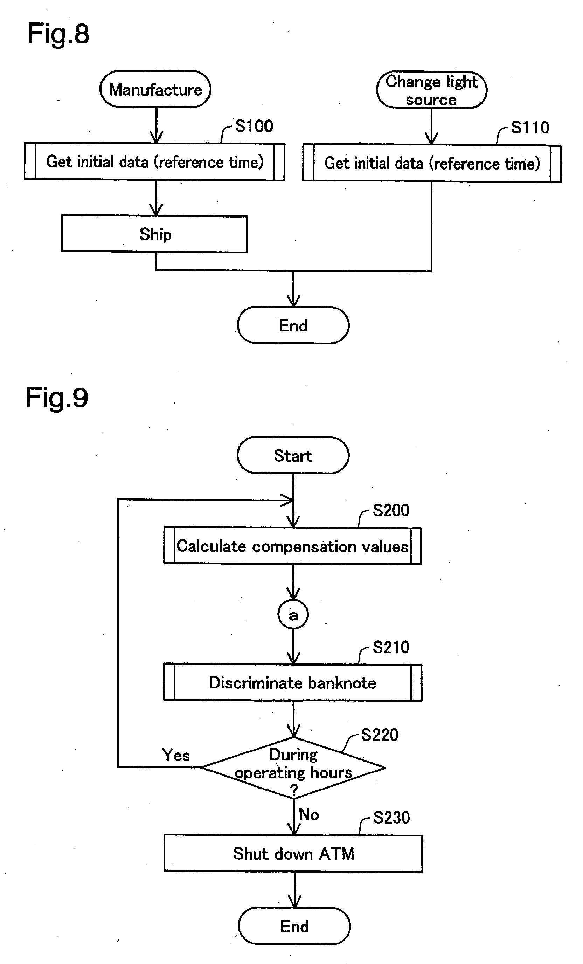

The processing sequence between manufacturing the ATM 1 and starting up the ATM 1 will be explained in reference to Fig. 8. Fig. 8 is a flowchart illustrating the operations when starting up the ATM 1 in which the image sensor according to the present example of embodiment is equipped. The explanation below will follow the flowchart.

After the ATM 1 is manufactured, the CPU 36 of the ATM 1 stores the initial data in the non-volatile memory unit 31 (Step S100). Preferably the initial data is stored in advance in the non-volatile memory unit 38 so that the ATM 1 will be operational immediately after shipping. Note that the initial data conversely may be stored in the non-volatile memory unit 38 after the ATM 1 is shipped and, for example, installed in a bank. Note that the initial data is stored in the non-volatile memory unit 38 again if the light source 13 is replaced after shipping (Step S110). This is because the initial data stored in the non-volatile memory unit 38 is unusable if the light source 13 has been replaced. Note that the details of the operations of storing of the initial data in the non-volatile memory unit 38 will be described below.

The operating procedures after the ATM 1 has been started up will be described in reference to Fig. 9. Fig. 9 is a flowchart illustrating the operations between startup and shutdown of the ATM 1. The ATM 1 starts up at the beginning of operating hours, and awaits operations by a user. When, for example, cash deposit operations are performed by a user of the ATM 1, the CPU 36, which is in the banknote discriminating unit 33 within the ATM 1, calculates compensation values (Step S200). When the compensation values have been calculated, the CPU 36 performs the discrimination of the banknote 23 (Step S210). When the discrimination of the banknote 23 has been completed, then the ATM control unit 2 determines whether or not the current time is within operating hours (Step S220), and if during operation hours, then the deposit operation by the next user is awaited (Step S200). On the other hand, if no during operating hours, then the ATM control unit 2 shuts down the ATM 1 (Step S230). Note that the detailed processing for calculating the compensation values and for banknote discrimination will be explained below.

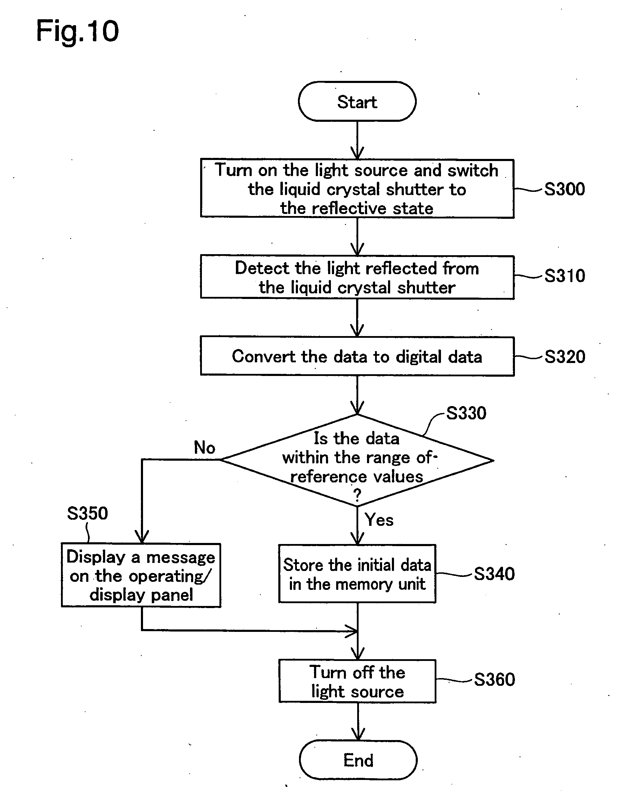

The processing procedures when storing the initial data in the ATM 1 will be explained in reference to Fig. 10. Fig. 10 is a flowchart for performing the initial data storage (Step S100 or Step S110). The explanation follows the flowchart below.

A technician from the manufacturer of the ATM 1 operates the operating/display panel 6 to store the initial data in the non-volatile memory unit 38. When the technician operates the operating/display panel 6, the operations are analyzed by the ATM control unit 2 to issue commands to the banknote deposit/dispenser mechanism unit 7 to acquire the initial data. The banknote deposit/dispenser mechanism control unit 8 of the banknote deposit/dispenser mechanism unit 7 sends commands to the CPU 36 of the banknote discriminating unit 33. The CPU 36 issues commands to the illumination control unit 14 of the sensor control unit 35 to turn the power supply 13 on, and issues commands to the shutter control unit 18 to switch the liquid crystal shutter 17 to the reflective state (Step S300). The CPU 36 issues commands to the drive unit 19 to place the photosensitive elements 16 in the detection state, causing the photosensitive elements 16 to detect the light reflected from the liquid crystal shutter 17 (Step S310).

The A/D converter 41 of the image processing unit 20 converts into digital data the detected values (analog data) detected by the photosensitive elements 16 (Step S320). The CPU 36 determines whether or not the detected values are within the range of the initial values already stored in the non-volatile memory unit 38 (Step S330). If the detected values are within the range of the initial values, then the CPU 36 stores, in the non-volatile memory unit 38, the detected values as the initial data from the time of initial data storage (hereinafter termed the "reference time") (Step S340).

If the detected values are not within the range of the initial values, then the CPU 36 provides notification to the banknote deposit/dispenser mechanism control unit 8 through the communications control unit 39. The banknote deposit/dispenser mechanism control unit 8 notifies the ATM control unit 2 that the detected values are not within the range of the initial values, and the ATM control unit 2 displays a message to that effect on the operating/display panel 6 (Step S350). The CPU 36 issues an instruction to the illumination control unit 14 of the sensor control unit 35 to turn the light source 13 off (Step S360). Note that when there is a display on the operating/display panel 6 that the detected values are not in the range of initial values, the user may take action such as replacing the light source 13 or repairing the ATM 1 itself.

Note that the process of acquiring the initial data is performed not just prior to shipping, but also when the light source has been changed (Step S110), at which time the processing procedure is the same.

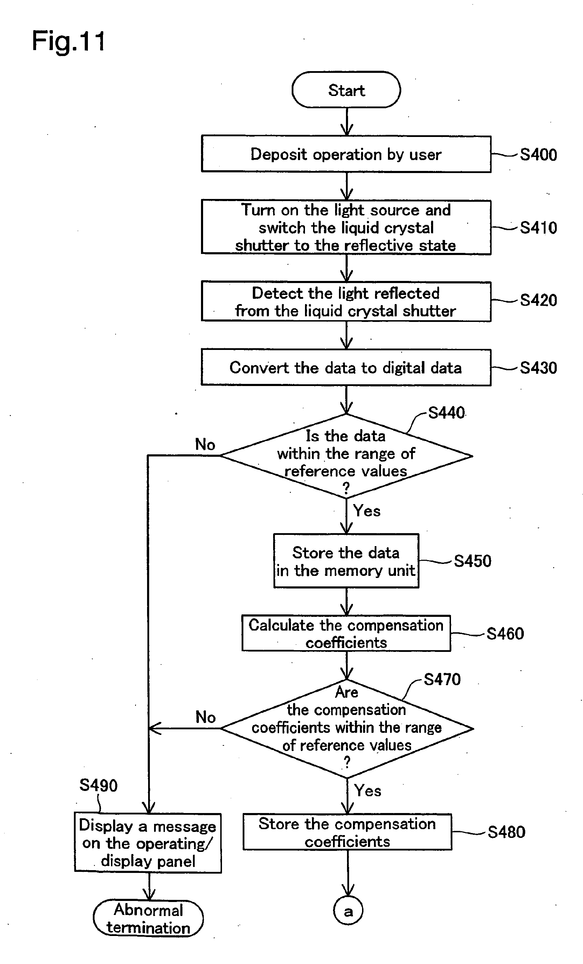

The processing procedure for calculating the compensation values will be explained in reference to Fig. 11. Fig 11 is a flowchart illustrating in detail the process when the compensation values are calculated (Step S200) after the ATM 1 has been started up and prior to banknote discrimination. The explanation below will follow the flowchart. Note that it is assumed that the initial data at the reference time has already been stored in the non-volatile memory unit 38.

When the user of the ATM 1 operates the operating/display panel 6 to perform a process of depositing cash in the ATM 1 (Step S400), the operations are analyzed by the ATM control unit 2 and the details of the operations are sent to the banknote deposit/dispenser mechanism unit 7. The banknote deposit/dispenser mechanism control unit 8 of the banknote deposit/dispenser mechanism unit 7 issues a command to the CPU 36 of the banknote discriminating unit 33 to calculate the compensation values. The CPU 36 issues a command to the illumination control unit 14 of the sensor control unit 35 to turn the light source 13 on, and issues a command to the shutter control unit 18 to switch the liquid crystal shutter 17 to the reflective state (Step S410). The CPU 36 issues a command to the drive unit 19 to place the photosensitive elements 16 in the detection state, causing the photosensitive element 16 to detect the light that is reflected from the liquid crystal shutter 17 (Step 420). The A/D converter 41 of the image processing unit 20 converts into digital data the detected values (analog data) detected by the photosensitive elements 16 (Step S430).

The CPU 36 determines whether or not the detected values are in the range of values for the data for comparison stored in advance in the non-volatile memory unit 38 (Step S440). If the detected values are within the range of the values of the data for comparison, then the CPU 36 stores the detected values into the memory unit 37 as the data for comparison when calculating the compensation values (Step S450).

The CPU 36 reads out the initial data from the non-volatile memory unit 38, reads out the data for comparison from the memory unit 37, and calculates the compensation values (Step S460). The CPU 36 determines whether or not the compensation values that have been calculated are within the range of compensation values that is stored in advance in the non-volatile memory unit 38 (Step S470). If the calculated compensation values are within the range for compensation values, then the CPU 36 stores the calculated compensation values in the memory unit 37 (Step S480), and processing advances to the operations for discriminating the banknote 23.

On the other hand, if the detected values are not within the range for values for data for comparison, or if the calculated compensation values are not within the range for the compensation values, then the CPU 36 provides notification of such to the banknote deposit/dispenser mechanism control unit 8 of the banknote deposit/dispenser mechanism unit 7 through the communications control unit 39. The banknote input/output control unit 8 forwards the notification to the ATM control unit 2 of the ATM 1. The ATM control unit 2 displays on the operating/display panel 6 a message indicating that there has been a failure in the ATM 1 (Step S490). The user of the ATM 1 is able to tell that a failure has occurred in the ATM 1 based on the display on the operating/display panel 6, making it possible to take action such as summoning a bank employee. Note that when the ATM control unit 2 displays the notification on the operating/display panel 6 that a failure has occurred in the ATM 1, an alarm may be sounded to inform the bank employee that a failure has occurred in the ATM 1.

Moreover, the processing procedures in Step S400 through Step S490 may be performed during the time between one user and the next, or may be performed during an inspection time that is performed, for example, once per day, rather than being performed when a user is using the ATM 1. In such a case, an alarm may sound to inform the bank employee when the calculated compensation values are approaching the limits of the range for the compensation values, even when the calculated compensation values are within the range for compensation values. This makes it possible to take action, such as preventing the use of the ATM 1, when there is the risk of the occurrence of a failure, thereby preventing the inconvenience to the user that would be caused by a failure of the ATM 1 during use by the user.

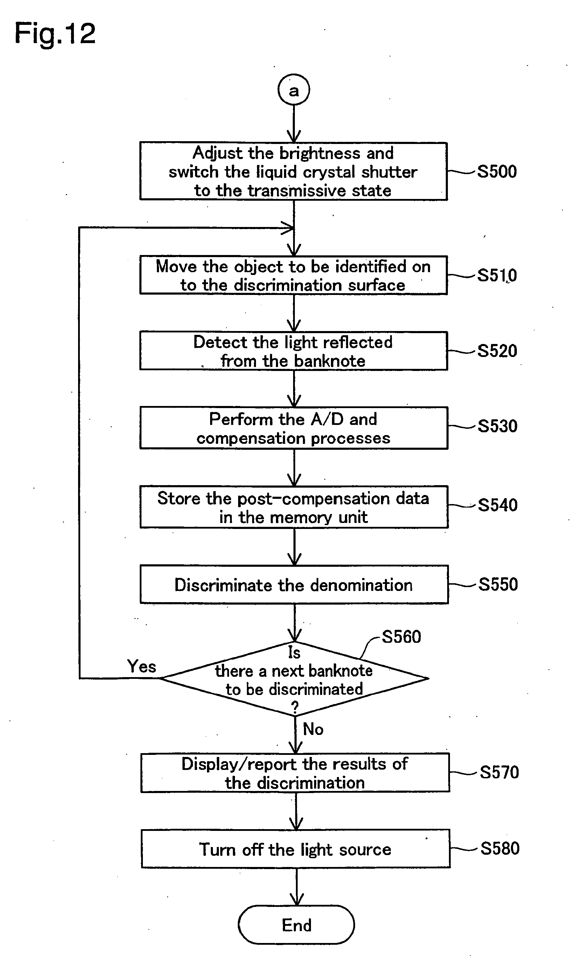

The processing procedure when the banknote discriminating unit 33 discriminates the banknote 23 will be explained in reference to Fig. 12. Fig. 12 is a flowchart illustrating the details of the process for discriminating the banknote 23. the explanation below will follow the flowchart. The operations below follow after the CPU 36 has stored the compensation values in the memory unit 37 (Step S480).

The CPU 36 reads out the compensation values from the memory unit 37, issues a command to the illumination control unit 14 of the sensor control unit 35 to adjust the brightness of the light source 13 based on the compensation values, and issues a command to the shutter control unit 18 to switch the liquid crystal shutter 17 into the transmissive state (S500). The CPU 36 causes the rollers 21 to rotate to convey the banknote 23 to the discrimination surface 22 (Step S510). The CPU 36 issues a command to the drive unit 19 to place the photosensitive elements 16 into the detection state, causing the photosensitive elements 16 to detect the light reflected form the banknote 23 (Step S520).

The A/D converter 41 of the image processing unit 20 converts to digital data the detected values (analog data) which were detected by the photosensitive elements 16. The CPU 36 sends the compensation values to the compensation unit 42 of the image processing unit 20. The compensation unit 42 uses the compensation values to perform a compensation process on the digital data (Step S530). The CPU 36 stores the post-compensation data process into the memory unit 37 (Step S540).

The CPU 36 reads out the post-compensation data from the memory unit 37, reads out, from the non-volatile memory 38, the banknote data that has been stored in advance, compares the two, discriminates the denomination and/or authenticity of the banknote indicated by the post-compensation data, and stores the result in the memory unit 37 (Step S550). The CPU 36 then determines whether or not there is a next banknote note 23 to be discriminated (Step S560), and then returns to Step S510 if there is a next banknote note 23 to be discriminated.

On the other hand, if there is no next banknote note 23 to be discriminated, then the CPU 36 reads out, from the memory unit 37, the total value of the discriminated banknote 23 and sends the total value to the banknote deposit/dispenser mechanism control unit 8 of the banknote deposit/dispenser mechanism 7 through the communications control unit 39. The banknote deposit/dispenser mechanism control unit 8 sends the total value of the banknote that has been discriminated to the ATM control unit 2 of the ATM 1. The ATM control unit 2 displays, as the amount of cash deposited, the total value of the banknote that was discriminated, doing so on the operating/display panel 6, and sends the deposit data to the central host computer 44 (Step S570). The CPU 36 issues a command to the illumination control unit 14 to turn the light source 13 off (Step S580), and terminates this processing routine.

As described above, the ATM 1 as set forth in the present example of embodiment is provided with a liquid crystal shutter 17 that can be switched electrically between a transmissive state and a reflective state depending on whether or not a voltage is applied to the liquid crystal 25, where this liquid crystal shutter 17 is disposed in the banknote discriminating unit 33 between the light source 13 and the discrimination surface 22, thus making it possible to switch between the operations for calculating the compensation values (where the shutter 17 is switched to the reflective state) and the operations for discriminating the banknote 23 (where the liquid crystal shutter 17 is switched to the transmissive state) with extreme ease. The result is the ability to perform compensation on the data acquired from the image sensor easily.

Moreover, in the ATM 1 as set forth in the present example of embodiment, the banknote discriminating unit 33 calculates compensation values immediately before discriminating the banknote 23, and then continues immediately to performing the discrimination of the banknote 23, and thus the precision of the compensation values is high, resulting in the discrimination accuracy of the banknote 23 being high as well. In addition, because the compensation values are calculated immediately before discriminating the banknote 23 and the operation for discriminating the banknote 23 is performed immediately thereafter, it is not necessary to stop the operation of the ATM 1 to calculate the compensation values, so there is no loss in equipment availability. Note that when the compensation values are calculated, only a single line's worth of reflected light need be detected by the photosensitive elements 16, making it possible to calculate the compensation values in an extremely short time period when compared to the time required for discriminating the banknote 23. As a result, the compensation process essentially has no impact on the time required for the deposit operation from the perspective of the user of the ATM 1.

Furthermore, in the ATM 1 as set forth in the present example of embodiment, the liquid crystal shutter 17 of the banknote discriminating unit 33 is between the light source 13 and the discrimination surface 22, and so does not become scratched or soiled by the conveyance of the banknote 23. Consequently, the liquid crystal shutter 17 can be used as a stable reference surface when calculating the compensation values.

### F. Modified Embodiments:

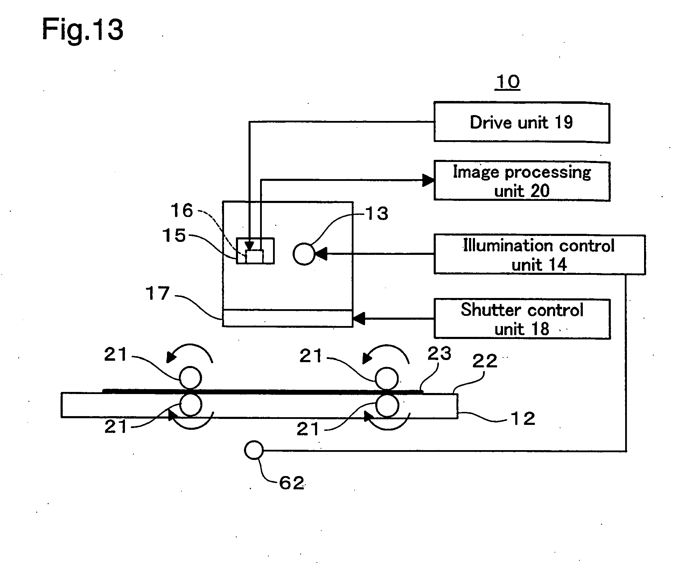

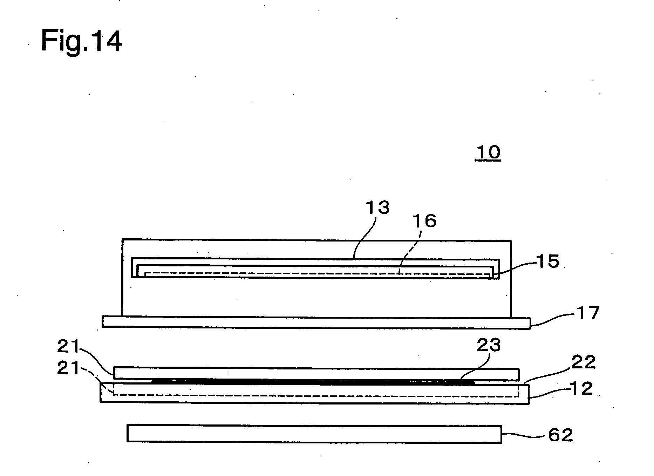

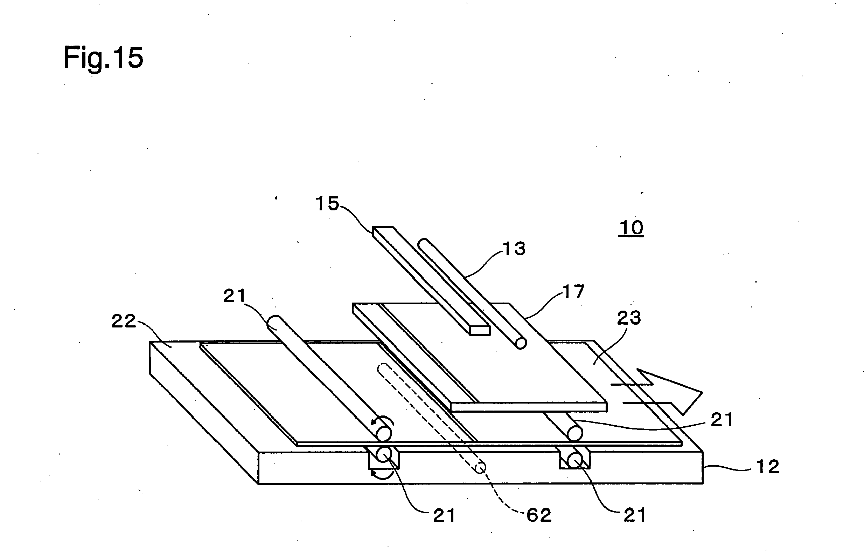

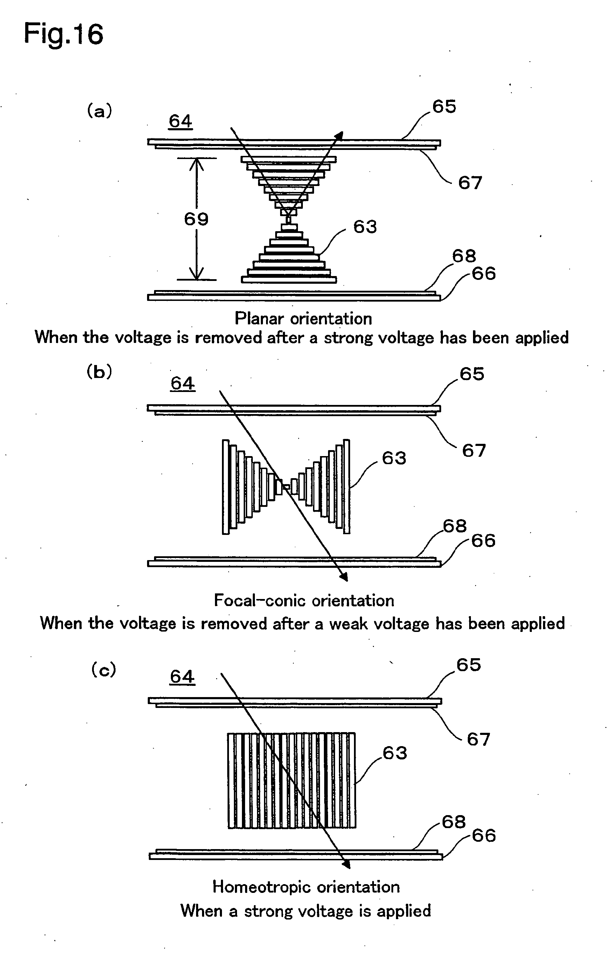

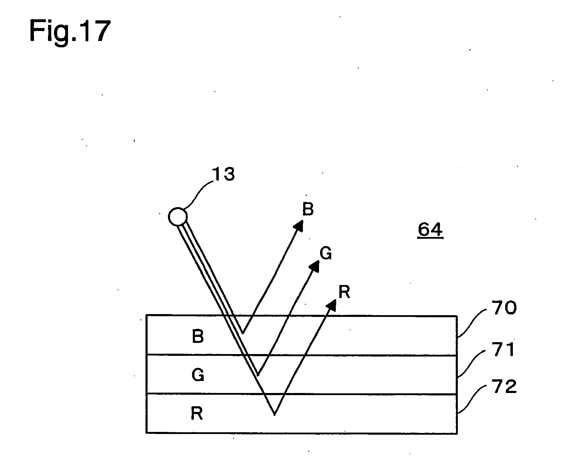

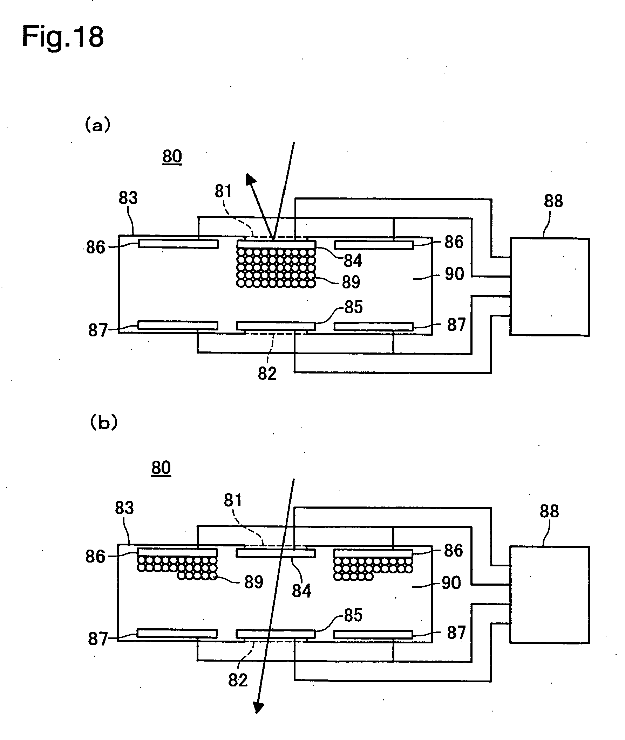

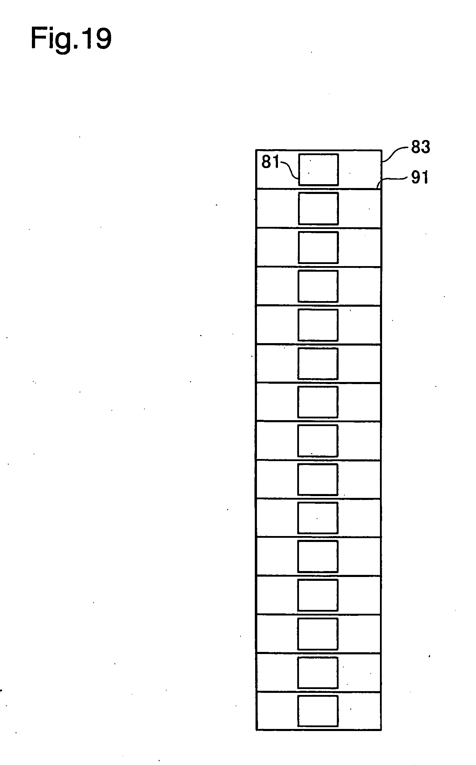

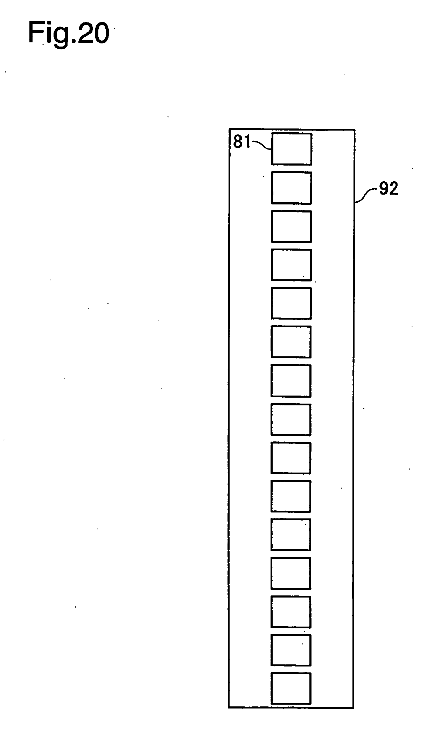

(1) In the image sensor according to the above embodiment two or more photosensitive elements 16 are disposed in a line. However, it is also possible to have one or more photosensitive element 16 that is movable in the primary scan direction. In such a case it is possible to eliminate the variability of the photosensitivity between the individual photosensitive elements 16.
(2) While in the above embodiment only a reflective image sensor is used as the image sensor, instead a second light source may be provided on the opposite side of the document surface 22 from the light source 13. That is, rather than only a reflective-type image sensor function, a transmissive-type image sensor function may be provided as well. Banknote has watermarks, and there are many ATMs provided with a transmissive-type image sensor function in addition to the reflective-type image sensor function in order to detect, for example, water marks.
   The structure of an image sensor according to the modified example 2 will be explained in reference to Fig. 13 through Fig. 15. Fig. 13 is an explanatory diagram illustrating schematically a side view of an image sensor according to the second modified embodiment, Fig. 14 is a front view of the image sensor according to the second modified embodiment, and Fig. 15 is an oblique view of the image sensor according to the second modified embodiment. The structure of the second modified example is essentially the same structure as the structure of the image sensor 10 of the ATM 1 in the present example of embodiment; however, there is a difference in the point that a second light source 62 is provided on the opposite side of the document surface 22 from the light source 13. In this second modified example, the light source 62 is turned off when the unit is operating as a reflective-type image sensor. Consequently, when the unit is functioning as a reflective-type image sensor, the operations when calculating compensation values and when discriminating currency are exactly the same as in the present example of embodiment, and thus explanations regarding the operation of the second modified example are omitted.
   Although a reference plate for performing compensation for all of the reflected light from a reflective image sensor light source 13 must be placed under the discrimination surface when a transmissive image sensor function is provided in addition to a reflective image sensor function, it is necessary for the light from the second light source 62, used for the transmissive image sensor, to pass through, and thus it is not possible for the reference plate for performing compensation for all of the reflected light from the light source 13 for the reflective image sensor to be disposed under the discrimination surface. However, in the second modified example, the reference plate for performing compensation for all of the reflected light from the reflective image sensor light source 13 is a liquid crystal shutter 17, thus making it possible to provide a second light source 62 for the transmissive image sensor, and to perform compensation for all of the reflected light from the light source 13 for the reflective image sensor in each operation.
(3) A cholesteric liquid crystal 63 may be used as the liquid crystal material for the liquid crystal shutter 17. A cholesteric liquid crystal 63 has the property of maintaining the orientation even when the applied voltage is turned off, resulting in active research for an electronic paper material; however, this material may also be used as the material for the liquid crystal shutter.
   A liquid crystal shutter 64 according to a third modified example will be explained in reference to Fig. 16. Fig. 16 is an explanatory diagram illustrating a liquid crystal shutter 64 that uses a cholesteric liquid crystal 63. Here Fig. 16 (a) is an explanatory diagram for the case wherein no voltage is applied to the cholesteric liquid crystal 63. Fig. 16 (b) is an explanatory diagram for the case wherein a weak voltage is applied to the cholesteric liquid crystal 63, and Fig. 16 (c) is an explanatory diagram for the case wherein a strong voltage is applied to the cholesteric liquid crystal 63. These structures will be explained below. The liquid crystal shutter 64 comprises two glass plates 65 and 66 with a cholesteric liquid crystal 63 interposed there between. The glass plates 65 and 66 are provided with transparent electrodes 67 and 68 for applying a voltage to the cholesteric liquid crystal 63. Note that while an orientation film may be used in the liquid crystal shutter 64, the cholesteric liquid crystal 63 has the property of achieving an electrically bistable state without the use of an orientation film if a small amount of polymer is added. As a result, the orientation film need not be used. The operation of the cholesteric liquid crystal 63 will be explained below.
   (a) When no voltage is applied to the cholesteric liquid crystal 63.
      The cholesteric liquid crystal 63 will have the planar orientation shown in Fig. 16 (a). When light is incident on the liquid crystal shutter 64, color light is reflected selectively depending on the spiral pitch 69 of the cholesteric liquid crystal 63.
   (b) When a weak voltage is applied to the cholesteric liquid crystal 63.
      As is shown in Fig. 16 (b), when a weak voltage is applied to the cholesteric liquid crystal 63, the orientation of the cholesteric liquid crystal 63 changes to a focal-conic orientation, so the light that is incident on the liquid crystal shutter 64 passes through the liquid crystal shutter 64. In this state, the focal-conic orientation is maintained and the light continues to pass even if the applied voltage is removed.
   (c) When a strong voltage is applied to the cholesteric liquid crystal 63.
      When a strong voltage is applied to the cholesteric liquid crystal 63, the orientation thereof changes to a homeotropic orientation as shown in Fig. 16 (c). This is a state wherein the degree of transparency is increased over that of the focal-conic orientation, so the light that is incident on the liquid crystal shutter 64 passes. When the applied electric voltage is removed in this state, the homeotropic orientation changes to a planar orientation, and the light is reflected.
   Note that when the cholesteric liquid crystal 63 is used, the liquid crystal shutter 64 enters a transmissive state when a voltage is applied to the liquid crystal shutter 64, and enters a reflective state when no voltage is applied. Consequently, when compared to the liquid crystal shutter 17 explained in the example of embodiment, the relationship between the transmissive state/reflective state of the liquid crystal shutter and whether or not a voltage is applied is reversed.
   When a cholesteric liquid crystal 63 is used as the liquid crystal shutter, glass plates can be used as the plates between which the liquid crystal is interposed, rather than having to use polarizing plates, enabling increased luminescent flux through the shutter unit when compared to the liquid crystal shutter 17 that uses the polarizing plates described in the example of embodiment. Moreover, the use of the cholesteric liquid crystal 63 is superior from the perspective of energy conservation because the orientation is maintained even after the applied voltage is removed after a weak voltage has been applied.
(4) Preferably the liquid crystal shutter 64 that uses the cholesteric liquid crystal 63 has a 3-layer structure comprising a layer that reflects blue, a layer that reflects green, and a layer that reflects red. This makes it possible to use a single liquid crystal shutter to reflect all wavelengths that are produced by the light source, even when the light source is able to produce light of a plurality of different wavelengths and even when there is a light source for each of the plurality of wavelengths.
   A liquid crystal shutter 64 according to the fourth modified example will be explained in reference to Fig. 17. Fig. 17 is a schematic diagram of the case wherein the liquid crystal shutter 64 has a three-layer structure. Beginning with the side nearest the light source 13, the structure has a layer 70 that reflects blue, a layer 71 that reflects green, and a layer 72 that reflects red. The color of the light that is reflected can be changed easily by changing the helical pitch of the cholesteric liquid crystal 63. When no voltage is applied to the cholesteric liquid crystal 63, then if light from the light source 13 is incident on the liquid crystal shutter 64, each color of light is reflected in the sequence of blue, green, and red (top to bottom in the figure). The result is that it is possible to reflect white light.
   While the liquid crystal shutters 17 and 64 were used as examples to explain the shutter unit, the structure of the shutter unit is not limited thereto. Insofar as it is possible to switch between a state that transmits light and a state that reflects light, shutter units that are not liquid crystal shutters may be used. That is, all that is necessary is to interpose, between the light source 13 and the discrimination surface 22, a shutter unit capable of switching between a state that transmits light and a state that reflects light.
(5) For example, let us consider, as the shutter unit, a shutter 80 that uses electrophoresis. The shutter 80 that uses electrophoresis will be explained in reference to Fig. 18 through Fig. 20. Fig. 18 is an explanatory diagram illustrating schematically a side view of the shutter 80 that uses electrophoresis. Fig. 19 is an explanatory figure illustrating schematically a top view of the shutter 80 that uses electrophoresis. Fig. 20 is an explanatory diagram that illustrates schematically the top surface of the shutter 80 that uses electrophoresis.
   The shutter 80 has a structure wherein cells 83 that have opening parts 81 and 82 in a portion of the top surface and the bottom surface thereof are disposed in one or more columns. Transparent electrodes 84 and 85 are disposed on each of the opening parts 81 and 82. The respective electrodes 86 and 87 are disposed on the top surfaces and the bottom surfaces of the cells 83 in the positions other than the positions of the opening parts 81 and 82. Drive units 88, for applying voltages, are connected to the transparent electrodes 84 and 85, and to the electrodes 86 and 87. A liquid 90 into which electrophoretic particles 89 is filled into the cells 83. A partition 91 is provided between two cells 83. Although partition walls 91 are provided between each of the cells 83 that are aligned in a single column, conversely, if there is, in total, only a single cell 92, as shown in Fig. 20, the partition 91 need not be provided.
   When the drive unit 88 applies a voltage between the two transparent electrodes 84 and 85 and the applied voltage is removed from between the two electrodes 86 and 87, then, as shown in Fig. 18 (a), the electrophoretic particles 89 move to the space between the two transparent electrodes 84 and 85, reflecting the light that is incident from above the opening part 81. Conversely, when a voltage is applied between the two electrodes 86 and 87 and the applied voltage is removed from between the two transparent electrodes 84 and 85, then, as shown in Fig. 18 (b), the electrophoretic particles 89 move to the space between the two electrodes 86 and 87, so that the electrophoretic particles will leave the space between the transparent electrodes 84 and 85. The result is that the light that is incident from above the opening part passes to the opening part 82 on the other side.
(6) The structure in the example of embodiment is one wherein banknote is discriminated continuously by an ATM 1 according to the present example of embodiment, each time the discrimination for one banknote note has been completed, the presence or absence of the next banknote to be discriminated is detected, and the next banknote, if any, is discriminated, and if there is no next currency to be discriminated, then the discrimination is stopped at that banknote note; however, the structure may instead be one wherein the number of notes of banknote to be discriminated is counted first, and each time a single note is discriminated, the number of discriminations is incremented, or each time a single note is discriminated, the number of remaining notes is decremented, with control based on the number of remaining notes to be discriminated.
(7) While an explanation was given regarding cash deposit in the present example of embodiment, the image sensor 10 may be used in cash disbursement rather than just cash deposits. While the vault cassette 9 is provided with banknote sorted into one vault cassette 9 for each denomination of currency, if it is a human that is loading the notes, there is the potential for a note with an incorrect denomination to be placed in the vault cassette 9. Consequently, the denominations of the currency are checked at the time of disbursements to prevent dispersing a note with an incorrect denomination.
   Although an ATM was used as the example in the example of embodiment of an image sensor/discriminating device according to the present invention, the present invention can be used in image sensor/discriminating devices for discriminating, for example, negotiable securities, checks, admission tickets, commuter tickets, and the like, instead of in an ATM.
   While forms of embodiment of the present invention have been explained above based on several examples of embodiment, the forms of embodiment of present invention as described above are to facilitate understanding of the present invention, and in no wise limit the present invention. The present invention may be modified or improved without deviating from the intent thereof and without deviating from the scope of patent claims, and the present invention may, of course, include equivalents thereof.

## Claims

1. An image sensor for discriminating objects, the image sensor comprising:
a support,unit that supports the objects;
a light source that illuminates the object with light for discriminating, and is disposed facing the support unit;
a photosensitive unit having a photosensitive element and outputting detected value in accordance with light inputted into the photosensitive element, and being disposed on the same side of the support unit as the light source;
a shutter unit that transmits or reflects light that is directed from the light source to the support unit, the shutter unit being disposed between the light source and the support unit; and
a shutter control unit that controls the shutter so as to reflect light form the light source during the calibration of the photosensitive unit.

2. An image sensor as set forth in Claim 1 further comprising:
a second light source disposed on the opposite side of the support unit from the photosensitive unit.

3. An image sensor as set forth in Claim 1, wherein the photosensitive unit includes two or more photosensitive elements.

4. An image sensor as set forth in Claim 1, wherein the photosensitive unit includes one or more photosensitive elements, where the photosensitive unit is movable in the primary scan direction of the image sensor.

5. An image sensor as set forth in Claim 1, wherein the shutter unit is a liquid crystal shutter.

6. An image sensor as set forth in Claim 5, wherein the liquid crystal of the liquid crystal shutter is cholesteric liquid crystal.

7. An image sensor as set forth in Claim 1 further comprising: 1
a compensation value calculating unit that calculates, during calibration, a compensation value using a detected value detected by the photosensitive unit and a reference value prepared in advance; and
a compensation unit that corrects and outputs the detected value, detected by the photosensitive unit, using the calculated compensation value.

8. A discriminating device comprising:
an image sensor as set forth in any of Claims 1 through 6:
an illumination control unit that controls at least one of turning on the light source, turning off the light source, and the brightness of the light source;
an image processing unit that processes detected values detected by the photosensitive unit;
a compensation value calculating unit that calculates, during calibration, a compensation value using a detected value detected by the photosensitive unit and a reference value prepared in advance; and
a memory unit that stores the compensation value calculated by the compensation value calculating unit and storing the detected values processed by the image processing unit; and
a compensation unit that corrects and outputs the detected values, outputted by the photosensitive unit, using the compensation value.

9. A method of correcting a discriminating device that is provided with a light source illuminating a support unit, a shutter unit interposed between the support unit and the light source and that is switchable between a reflective state and a transmissive state, and a photosensitive unit outputting detected value in accordance with inputted light, the method comprising:
switching the shutter unit the reflective state and detecting value of light reflected from the shutter;
calculating a compensation value using the detected value of the light reflected from the shutter and a reference value to; and
switching the shutter unit the transmissive state and detecting value of light reflected from the object; and
correcting the detected value of the light reflected from the object using the compensation value and outputting the corrected detected value of the light reflected from the object.
